# EUROPEAN PATENT APPLICATION

(11) **EP 1 873 126 A1**
(43) Date of publication of application: **02.01.2008**
(21) Application number: 07102765.0
(22) Date of filing: 21.02.2007
(51) Int. Cl.: C03C 17/00, C03C 1/00, G02B 1/11

(54) **Anti-Glare Glass Substrate**

(30) Priority: 22.02.2006 JP 2006044713; 23.03.2006 JP 2006080506; 27.09.2006 JP 2006261745; 27.09.2006 JP 2006261746; 19.12.2006 JP 2006340973; 19.12.2006 JP 2006340974
(71) Applicant: Central Glass Co., Ltd., Ube-shi Yamaguchi (JP)
(72) Inventor: Tsuda, Yasutaka c/o Glass Research Center, Matsuzaka-shi Mie (JP); Tanaka, Katsuto c/o Glass Research Center, Matsuzaka-shi Mie (JP)
(74) Representative: Ziebig, Marlene

(57) **Abstract**

An anti-glare glass substrate used for liquid crystal display devices is disclosed, which comprises a glass substrate; and a coating covering one side of said substrate, the coating having, on its surface, projection bodies which have round bottom surfaces and have an average bottom surface area ranging from 80 to 400µm², the projection bodies being randomly arranged on said coating at a density of 5 or more projection bodies per an area equivalent to one pixel of the liquid crystal display device, and the coating having a surface roughness from 0.1 to 0.4µm. The anti-glare glass substrate can be prepared by the steps of (1) preparing a coating liquid by blending a silica sol (A) consisting of an oligomer whose crosslinks are formed from [SiO_{4/2}] as crosslinking units and whose number average molecular weight ranges from 300 to 1000 (polystyrene conversion) and a silica sol (B) consisting of an oligomer in which silicon oxides having bonds between aryl groups and silicon atoms are formed as crosslinking units and whose number average molecular weight ranges from 500 to 1000 (polystyrene conversion); and (2) applying the resulting coating liquid onto the surface of a glass substrate according to the spin coating technique.

## Description

### Technical Field of the Invention:

The present invention relates to an anti-glare (or glare-reducing) glass substrate for imparting anti-glare characteristic properties to a liquid crystal display device, as well as a method for preparing the same. In addition, the present invention relates to an anti-glare glass substrate for liquid crystal display devices, which can easily be washed, as well as a method for preparing the same.

### Technical Background of the Invention:

The liquid crystal display (LCD) device has been used in the display panels for use in a display device comprising a device for data-inputting such as a data-tablet plate. The device can not only input letters, patterns or the like through hand-writing operations using a data input device such as a data-inputting pen, but also can display the contents thus inputted on a display panel. As an example of the device, there can be mentioned a pen input device and touch panel device.

In addition, it has been desired to impart an anti-glare (AG) function to the side of the LCD facing the observer for the improvement of the visibility of the device. This anti-glaring function can be imparted to the device by the formation of appropriate uneven shape on the surface of a glass substrate. In respect of the uneven shapes capable of ensuring such an anti-glare function of the surface, the non-patent document 1 specified below introduces a proper relationship between the roughness of the surface irregularity and the distance between the convex and/or concave portions for the purpose of eliminating the glare of the LCD, of improving the clearness of the resulting images, and of inhibiting the occurrence of any white blurring.

Moreover, the patent document 1 specified below likewise discloses an uneven pattern having an anti-glare function which can ensure the ability of smoothly writing anything thereon with a pen, while taking into consideration the application of this device to pen-input devices.
Patent Document 1:
   J. P. Kokai No. 2004-240548;
Non-patent Document 1:
   KITAGAWA Atsushi, MATSUNAGA Takuya, "Development of Surface Processing Techniques for Ultra-fine LCD", Nitto Giho, 2002 (May), 40(No. 1): 29-31.

### Disclosure of the Invention:

### Subject to be attained by the Invention:

The surface roughness (Ra) required for ensuring a desired anti-glare function through the use of an uneven structure ranges from 0.01 to 0.5 µm, according to the teachings of, for instance, the patent document 1. According to the non-patent document 1, in which there is a discussion about the relation between the anti-glare characteristics and the clearness of the resulting images of the LCD device, the surface of the device should satisfy the following relation: (Surface roughness)/(distance between projections) ≦ 0.008. The proper distance between projections can thus be derived from the foregoing surface roughness value and as a result, the distance between projections required for this purpose ranges from 1.25 to 62.5 µm, or higher.

However, the conventional anti-glaring treatments have been developed only on the basis of such a technical idea that the interested surface is roughened and therefore, the height of uneven shape and the depth thereof observed at each particular position are randomly distributed from position to position. Moreover, the uneven structure or pattern should be non-periodic by nature in order to reduce the dependency of the reflection of light rays on the wavelength thereof.

Although the uneven structure of the surface would ensure an anti-glare function thereof, the unevenness likewise scatters the display light rays outputted from the LCD device. The area of each pixel for the LCD device ranges from about (40 to 80) × (150 to 250) µm². The number of projections arranged on each pixel would vary depending on the arrangements of the uneven structures non-periodically arranged, when simply controlling the distance between the neighboring projections. This in turn results in the dispersion in the quantity of light rays scattered on each pixel and accordingly, the user of the device would observe a partial iridescence generated through the interference.

Moreover, the surface subjected to an anti-glaring treatment may serve as an outermost layer of an LCD element or a structure having an LCD element such as a touch panel and a pen-input device and accordingly, it is quite liable to be exposed to external contaminations. When the surface provided with an uneven structure for imparting an anti-glare function thereto is contaminated with, for instance, fats and oils, it would often be quite difficult to remove or wash away such contaminants by simply wiping out the same with, for instance, a piece of cloth. For this reason, there has strongly been needed for the development of a surface member subjected to an anti-glare-processing, which can easily be washed.

Accordingly, it is an object of the present invention to provide an anti-glare glass substrate which is quite suitable for the control of the occurrence of any partial iridescence due to the interference resulted from the dispersion (or scattering) in the quantity of light rays scattered on each pixel of a device to which the anti-glare glass substrate is applied and which can suitably be washed with ease.

### Means for Attaining the Subject:

The present invention relates to an anti-glare glass substrate used for liquid crystal display devices, which comprises:
a glass substrate; and
a coating covering one side of said substrate;
the coating having, on its surface, projection bodies which have round bottom surfaces and have an average bottom surface area ranging from 80 to 400 µm²;
the projection bodies being randomly arranged on said coating at a density of 5 or more projection bodies per an area equivalent to one pixel of the liquid crystal display device; and
the coating having a surface roughness from 0.1 to 0.4 µm.

In this connection, the tern "anti-glaring characteristics" herein used means the surface having a 60-deg. (60°) relative-specular glossiness of 75 or lower, as determined according to the method as specified in JIS-Z8741 (1997).

The present invention is not based on such a technical idea that the interested surface is roughened, but on the basis of a novel design of the surface structure in which the foregoing projection bodies or projections, having such a shape discussed above, such as small hill-like projected bodies, are arranged on the approximately flat surface of a substrate, unlike the conventional techniques. Thus, the present inventor has been able to provide a novel design of a glass substrate surface, which can prevent the observers of the LCD from observing any partial iridescence thereof. The "small hill-like projected bodies" herein used means portions smoothly standing out or rising from a coating surface and more specifically, portions each having a dome-like shape which stands out from the coating surface and has a tip at the center of the projected body portions each having a volcanic caldera-like shape whose central portion is depressed, when they are viewed from the front of the surface.

From the viewpoint of the control of the iridescence discussed above, the projection bodies whose average bottom surface area (cross sectional area) ranges from 80 to 400 µm² and preferably 100 to 200 µm² are arranged on the approximately flat surface of the substrate, and when dividing the glass substrate surface into small sections each having a size corresponding to the area of each picture element of the liquid crystal display device, the projection bodies are irregularly or randomly or non-periodically arranged or distributed on each section at a distribution density of 5 or more and preferably, 10 or more. The upper limit would be for example, 100 or less, preferably, 50 or less, more preferably 25 or less, especially preferably 20 or less. Usually, the area of each picture element or pixel would be (40 to 80) × (150 to 250) µm².

According to the present invention, the anti-glaring and prevention of partial iridescence can be effectuated by appropriately establishing the factors such as bottom surface area of the projection bodies, in addition to the control of the heights evaluated by the surface roughness values. For instance, in order to prepare an anti-glare glass substrate while the number of the projected bodies to be arranged on each section is set at a level of 4 or lower, it is inevitable to increase the area occupied by these projected bodies. In this case, the resulting substrate possesses anti-glare characteristics, but the quantity of light rays scattered on each section is dispersed and as a result, the substrate surface causes partial iridescence due to the interference. On the other hand, when the surface roughness value is beyond the range specified above, the resulting substrate never shows anti-glare characteristics or the resulting substrate has poor see-through properties.

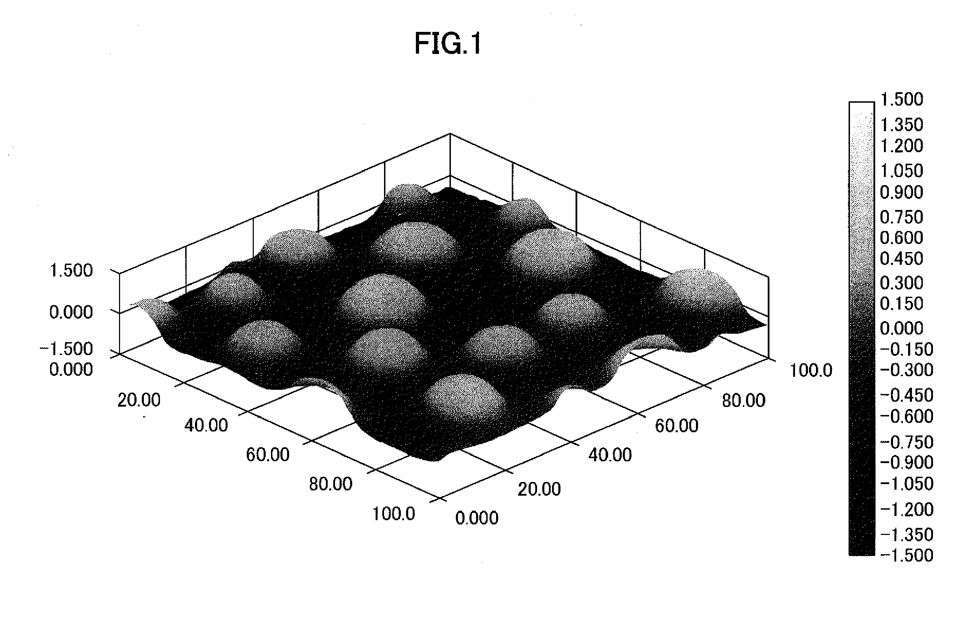

In respect of the surface of the anti-glare glass substrate, the shape thereof having an area of 100 × 100 µm² is observed using a contact type surface-scanner, the numerical data concerning the heights of projected portions thus found are plotted on a two-dimensional plane and as a result, these data give a pattern of the surface structure as shown in Fig. 1. According to the anti-glare glass substrate of the present invention, such a pattern of the surface structure is present throughout the whole surface of the glass substrate to which an anti-glare function is to be imparted. If the anti-glare glass substrate of the present invention is positioned on the white-displayed LCD panel, any interference of the displayed light rays is generated only with difficulty and any observer cannot recognize any partial iridescence due to such interference. In addition, the observer can likewise recognize the display on the LCD panel without accompanying any trouble.

Incidentally, the average bottom surface area is defined as a value obtained by arithmetically averaging the bottom surface area data observed for the whole projected bodies found in sections, when the sections are divided into small sections each having a size corresponding to the area of each picture element. If each of the projection bodies has a shape whose central portion is depressed, the areas of these depressed portions are likewise added to the bottom surface area to be calculated. In addition, the term "irregularly" or "randomly" used herein means such a state of a non-periodic condition that an anti-glare property is imparted by such arrangement. For example, such irregularity is shown in Fig. 1.

Furthermore, the foregoing surface roughness is so defined to be an arithmetically averaged value obtained by processing the data concerning the heights of the surface projections according to the method specified in "JIS B0601 (2001). Moreover, the surface roughness is used for evaluating the height of the projection bodies.

When dividing the glass substrate surface into small sections each having a size corresponding to the area of each picture element (or pixel) of the liquid crystal display element, the size of each resulting section is one corresponding to the area of a pixel of the LCD device, and the size of the section is in general recognized to be an area on the order of (40 to 80) × (150 to 250) µm² and it is suitably assumed to be 100 ×100 µm².

In the present invention, the foregoing projection bodies are irregularly or randomly distributed in each section at a density of not less than 5, but they are preferably assigned to each section at a density of not less than 10 from the viewpoint of the control of the foregoing partial iridescence. Furthermore, the number of projection bodies to be distributed within each section is not more than 100, preferably not more than 50, more preferably not more than 25 and further preferably not more than 20 while taking into consideration the easiness of the preparation of a glass substrate having a surface roughness ranging from 0.1 to 0.4 µm and preferably 0.1 to 0.3 µm.

In addition, when using the anti-glare glass substrate according to the present invention as a cover glass for an LCD device which has a pen-input device incorporated into the same, it is preferred that the cover glass can ensure an ability to smoothly write information thereon with a pen without causing any scratch- feeling. If taking this into consideration, it is preferred that the foregoing projection bodies are so designed to have a dome-like shape by setting the average bottom area diameter of the projection bodies at a level ranging from 25 to 500 times, preferably 50 to 200 times the foregoing surface roughness, when they are viewed from the front of the surface. When the projections are so designed that they have such a shape discussed above, the resulting glass substrate surface has portions each having a dome-like shape (see Fig. 1) which stands out from the flat surface of the coating and therefore, when using the more preferred anti-glare glass substrate according to the present invention as a cover glass for a pen-input device, the cover glass can ensure an ability to smoothly write information thereon with a pen without causing any scratch-feeling.

### Effects of the Invention

In the anti-glare glass substrate according to the present invention, the projection bodies preferably having a fine small hill-like shape would ensure a desired anti-glare effect. Moreover, the scattering of light rays by the projection bodies is uniform for respective sections each having an area corresponding to that of the pixel of an LCD device and accordingly, there is not observed any partial iridescence resulted from the interference upon using the same for the purpose of anti-glaring an LCD device and it can ensure an excellent visibility. In addition, when using the anti-glare glass substrate having a preferred shape according to the present invention as a cover glass for a pen-input device, the effects such as those described below will be accomplished: the cover glass can ensure an ability to smoothly write information thereon with a pen without causing any scratch-feeling.

### Brief Description of the Drawings

The present invention will now be described in more specifically while referring to the accompanying drawings, wherein
Fig. 1 is a diagram showing a three-dimensionally depicted image of the shape obtained by plotting, on a two-dimensional plane, numerical data concerning the heights of projection bodies observed when determining them by scanning the surface of the anti-glare glass substrate prepared in Example 1 of the present invention and provided thereon with small hill-like projection bodies using a contact type surface-scanner.

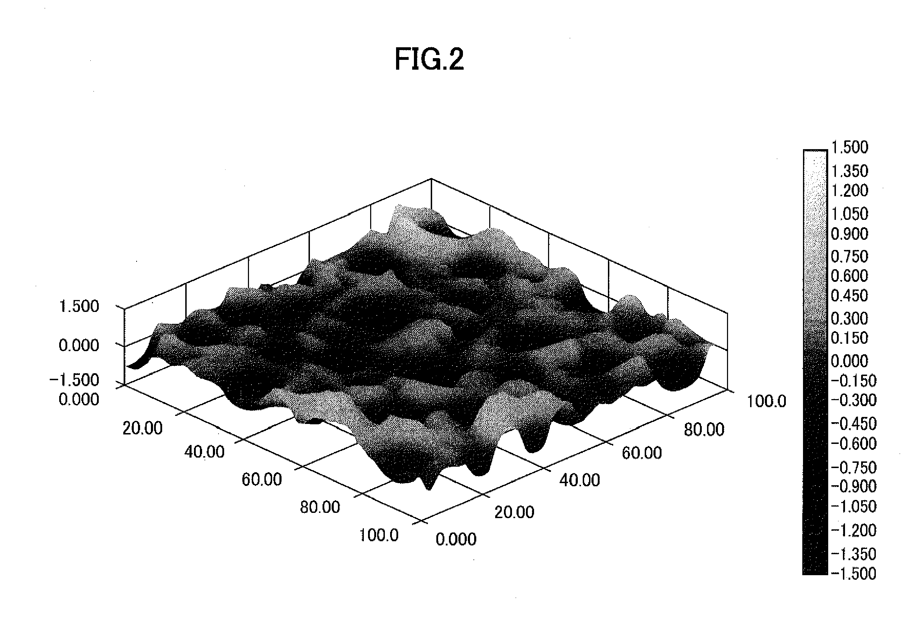

Fig. 2 is a diagram showing a three-dimensionally depicted image of the pattern or structure of the surface obtained by plotting, on a two-dimensional plane, numerical data concerning the heights of projection bodies observed when determining them by scanning the surface of the anti-glare glass substrate prepared in Example 2 of the present invention and provided thereon with small hill-like projected bodies using a contact type surface-scanner.

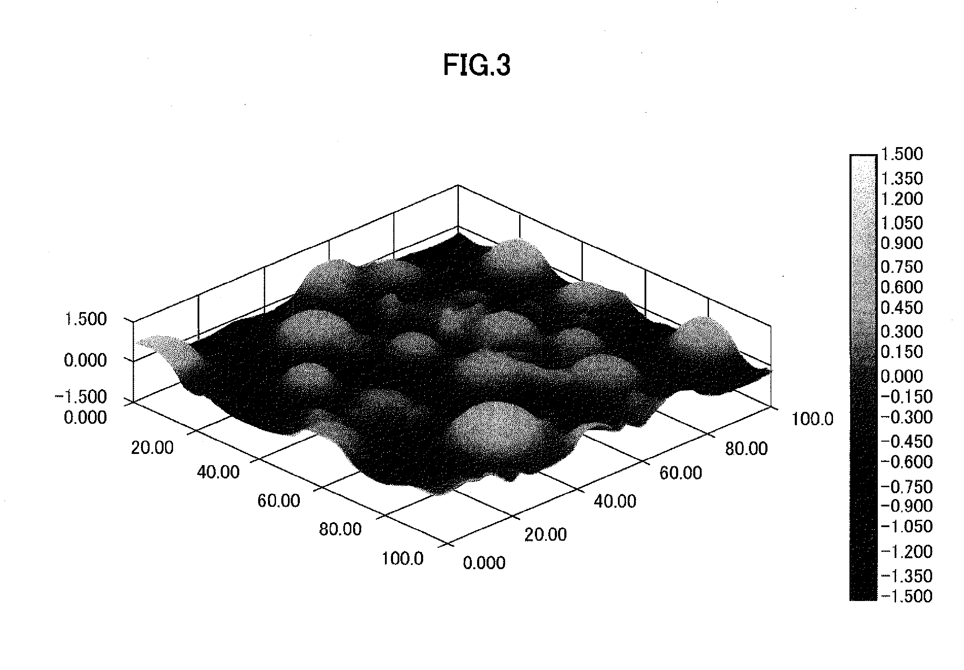

Fig. 3 is a diagram showing a three-dimensionally depicted image of the pattern or structure of the surface obtained by plotting, on a two-dimensional plane, numerical data concerning the heights of projection bodies observed when determining them by scanning the surface of the anti-glare glass substrate prepared in Example 3 of the present invention and provided thereon with small hill-like projection bodies using a contact type surface-scanner.

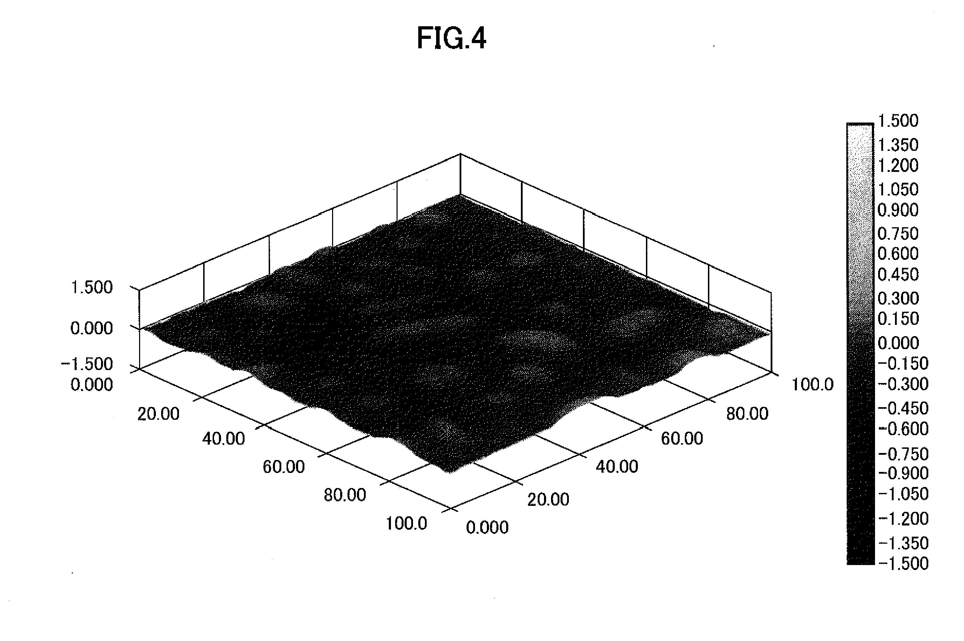

Fig. 4 is a diagram showing a three-dimensionally drawn image of the pattern or structure of the surface obtained by plotting, on a two-dimensional plane, numerical data concerning the heights of projection bodies observed when determining them by scanning the surface of the anti-glare glass substrate prepared in Comparative Example 1 and provided thereon with small hill-like projection bodies using a contact type surface-scanner.

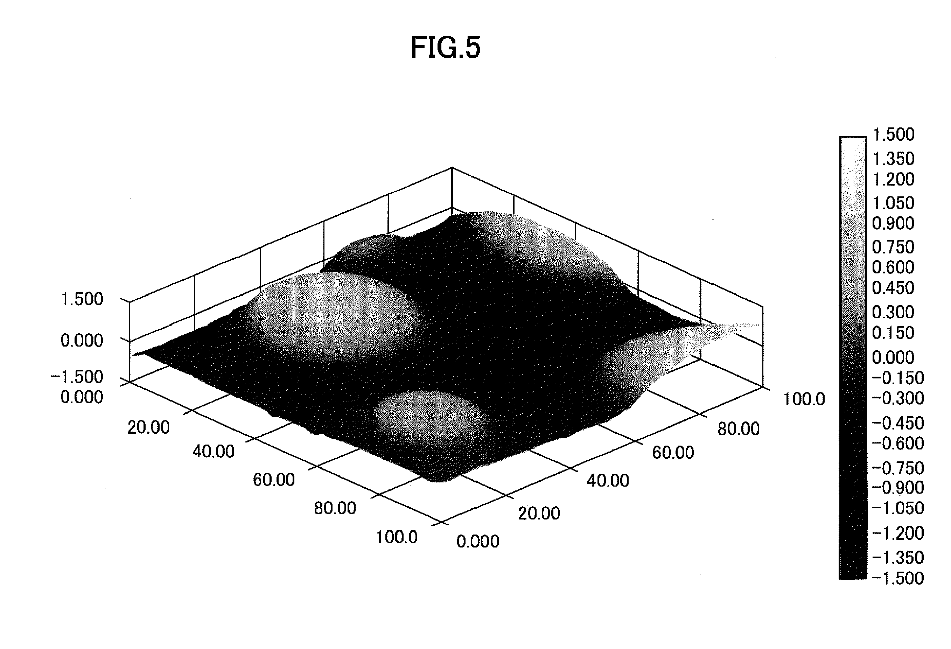

Fig. 5 is a diagram showing a three-dimensionally drawn image of the pattern or structure of the surface obtained by plotting, on a two-dimensional plane, numerical data concerning the heights of projections observed when determining them by scanning the surface of the anti-glare glass substrate prepared in Comparative Example 2 and provided thereon with small hill-like projected bodies using a contact type surface-scanner.

### Preferred Mode for Carrying Out the Invention

The anti-glare glass substrate having a shape specified in the present invention can be prepared by the cast molding technique or by the abrasion treatment of a glass substrate, but it is preferred to prepare an anti-glare glass substrate by applying a coating liquid onto a glass substrate, drying the coated liquid, preferably heating the same to form a thin film having an almost planar surface and to thus give an anti-glare glass substrate carrying projected bodies arranged thereon.

The anti-glare glass substrate provided thereon with the foregoing pattern the surface structure can be prepared by a method comprising the steps of preparing a coating liquid by mixing several kinds of silica sols each consisting of an oligomer which comprises silicon oxide as crosslinking structural units and applying the resulting coating liquid onto the surface of a glass substrate according to the spin-coating technique. More specifically, a coating liquid is prepared by blending a silica sol (A) consisting of an oligomer whose crosslinks are formed from [SiO_{4/2}] as crosslinking units and whose number average molecular weight ranges from 300 to 1000 as expressed in terms of that converted into the molecular weight of polystyrene and a silica sol (B) consisting of an oligomer whose crosslinks are formed from silicon oxides having bonds between aryl groups and silicon atoms as crosslinking units and whose number average molecular weight ranges from 500 to 1000 as expressed in terms of that converted into the molecular weight of polystyrene, and then the resulting coating liquid is applied onto the surface of a glass substrate according to the spin coating technique to thus give an anti-glare glass substrate and, if necessary, the coated film applied onto the glass substrate may be heated after the completion of the coating operation, to thus harden the coated film.

The silica sol used herein can be prepared by blending predetermined amounts of a silicon oxide precursor material such as an alkoxysilane, an organic solvent, and an acid catalyst as well as water and then stirring the resulting mixture. The time required for the stirring operation preferably ranges from 10 minutes to 20 days and particularly preferably one hour to 4 days, but the stirring period is not restricted to that specified above when the mixture is stirred at a temperature other than room temperature. In addition, the resulting mixture can likewise be heated to accelerate the reaction and to thus reduce the time required for the stirring operation.

As has been discussed above in detail, the hydrolysis of the foregoing silicon oxide precursor material can be carried out while adding a small amount of water and an acid catalyst, the resulting hydrolyzate of the mixture is then stirred at room temperature or with heating so that it may undergo condensation and/or polymerization to thus give a desired silica sol. In this connection, however, the amount of water to be added is preferably controlled in such a manner that the molar ratio: H₂O/(silicon oxide precursor material) ranges from 0.1 to 20 and preferably 4 to 8. If the added amount of water is controlled in this way, the molecular weight of the oligomers present in the resulting silica sol can be adjusted to a desired level. In general, there is observed such a tendency that the greater the amount of water added, the smaller the molecular weight of the resulting oligomers.

If the molar ratio is less than 0.1, the average molecular weight of the resulting oligomer is liable to be too large and this accordingly results in the easy formation of a cloudy silica sol, which is quite liable to form a heterogeneous thin film. For this reason, it is preferred to control the foregoing molar ratio so that it can fall within the range of from 0.1 to 20 in order to obtain a uniform anti-glare thin film.

The method for the preparation of the silica sol used herein is not restricted to that discussed above. In this respect, a method, which comprises the step of gradually blending the foregoing silicon oxide precursor material, diluted with a solvent, with an acidic aqueous solution diluted with a solvent, is preferably used herein, since it would permit the prevention of the occurrence of any abrupt reaction and the occurrence of a more uniform reaction. The acid catalyst usable herein may appropriately be selected from the group consisting of, for instance, an inorganic acids such as hydrochloric acid, sulfuric acid and nitric acid; and organic acids such as acetic acid, phthalic acid and succinic acid, while taking into consideration the rate of the hydrolysis of alkoxy groups present on the alkoxysilane used. In this connection, the acid catalyst is preferably added in such a manner that the pH value of the resulting silica sol solution falls within the range of from 0 to 5.

The foregoing organic solvents preferably used herein are those having good compatibility to the alkoxysilane constituting the starting liquid, silanol groups formed after the hydrolysis of the alkoxysilane and water. Specific examples of such organic solvents usable herein are alcohols, for instance, primary alcohols having 1 to 4 carbon atoms, secondary alcohols having 1 to 4 carbon atoms, and polyhydric alcohols such as glycerin and pentaerythritol; ethers and esters of the foregoing alcohols such as diethylene glycol, ethylene glycol monomethyl ether, ethylene glycol dimethyl ether, 2-ethoxy ethanol, propylene glycol monomethyl ether, and propylene glycol methyl ether acetate; ketones such as acetone and methyl ethyl ketone; amides such as formamide, N-methyl formamide, N-ethyl formamide, N,N-dimethyl formamide, N,N-diethyl formamide, N-methyl acetamide, N-ethyl acetamide, N,N-dimethyl acetamide, N,N-diethyl acetamide, N-methyl pyrrolidone, N-ethyl pyrrolidone, N-formyl morpholine, N-acetyl morpholine, N-formyl piperidine, N-acetyl piperidine, N-formyl pyrrolidone, N-acetyl pyrrolidone, N,N'-diformyl piperazine, and N,N'-diacetyl piperazine; lactones such as γ -butyrolactone; ureas such as tetramethyl urea and N,N'-dimethyl-imidazoline; and dimethyl sulfoxide.

These solvents may be used alone or in any combination. Among these solvents, organic solvents preferably used for making, conspicuous, the phase separation phenomenon essential to the anti-glare characteristics are, for instance, acetone, methyl ethyl ketone, and monohydric or primary alcohols having 1 to 4 carbon atoms. More preferably used herein are methanol, ethanol, n-propanol, isopropyl alcohol and acetone among others, with methanol or ethanol being most preferably used herein.

As the blend of several kinds of silica sols, preferably used herein are those obtained by blending a silica sol (hereunder referred to as Silica Sol (A)) whose crosslinks are formed from [SiO_{4/2}] as crosslinking units with a silica sol (hereunder referred to as Silica Sol (B)) having moderate hydrophobicity because of the presence of the crosslinks formed from silicon oxides having bonds between aryl groups and silicon atoms as crosslinking units.

When applying a coating liquid containing the resulting silica sol blend onto the surface of a substrate, the coating liquid undergoes phase-separation into a hydrophilic silica structure mainly comprising [SiO_{4/2}] and a hydrophobic silica structure having bonds between aryl groups and silicon atoms as the solvent is removed through drying. At this stage, a thin film, which undergoes a bi-nodal phase separation, can be obtained, if setting, at an appropriate level, the mixing ratio of the silica sol mainly comprising [SiO_{4/2}] to the silica sol having bonds between aryl groups and silicon atoms. As a result, the anti-glare glass substrate of the present invention can thus be formed. In this connection, the term "[SiO_{4/2}]" used herein means the basic constituent unit of siloxane, wherein four oxygen atoms are bonded to a silicon atom.

Moreover, it is also possible to prepare the foregoing coating liquid by incorporating, into the foregoing blend, an additional silica sol (hereunder referred to as Silica Sol (C)) whose crosslinks are formed from silicon oxides having bonds between alkyl groups and silicon atoms as crosslinking units as a component for preventing the formation of any crack in a thin film formed from the resulting coating liquid, when applying the liquid and then subjecting the resulting film to a heat-treatment after the latter undergoes its phase separation.

Silica Sol (A) is preferably prepared by hydrolysis and/or polycondensation in such a manner that the number average molecular weight of the resultant oligomer having silica crosslinks ranges from 300 to 1000 and preferably 500 to 900 as expressed in terms of that converted into the molecular weight of polystyrene. Examples of raw materials favorably used for preparing Silica Sol (A) are tetra-functional silanes carrying groups susceptible to hydrolysis reactions such as tetrachlorosilane, tetramethoxysilane, tetraethoxysilane, tetra(n-propoxy)silane, tetraisopropoxy- silane, and tetra(n-butoxy)silane.

In this respect, if the number average molecular weight of the silicon oxide oligomer in Silica Sol (A) as expressed in terms of that converted into the molecular weight of polystyrene exceeds 1000, large convex and concave portions are formed when preparing an anti-glare thin film and accordingly, the resulting film has insufficient quality. On the other hand, if the number average molecular weight thereof is less than 300, the silica component is scattered out of the substrate when applying the coating liquid onto the surface thereof according to the spin-coating technique and accordingly, a desired film can only be formed with considerable difficulty.

Silica Sol (B) is preferably prepared by hydrolysis and/or polycondensation in such a manner that the number average molecular weight of the oligomer having silica crosslinks ranges from 500 to 1000 and preferably 700 to 900, as expressed in terms of that converted into the molecular weight of polystyrene. Examples of raw materials favorably used for preparing Silica Sol (B) are silanes having one or two aryl groups per silicon atom such as phenyl trichlorosilane, phenyl trimethoxysilane, phenyl triethoxysilane, naphthyl trichlorosilane, naphthyl trimethoxysilane, naphthyl triethoxysilane, diphenyl dichlorosilane, diphenyl dimethoxysilane, diphenyl diethoxysilane, dinaphthyl dichlorosilane, dinaphthyl dimethoxysilane and dinaphthyl diethoxysilane.

In this respect, if the number average molecular weight of the silicon oxide oligomer having bonds between aryl groups and silicon atoms and present in Silica Sol (B) exceeds 1000 as expressed in terms of that converted into the molecular weight of polystyrene, large convex and concave portions are formed when realizing an anti-glare thin film and accordingly, the resulting film has insufficient quality. On the other hand, if the number average molecular weight of the oligomer having bonds between aryl groups and silicon atoms is less than 500, the size of the foregoing phase-separation zones cannot be controlled and as a result, a variety of situations may be brought about, such that the size of the projection bodies formed is too large or that the sizes of convex and concave portions are too small and this in turn make it quite difficult to uniformize the number of projected bodies per unit area on the substrate surface.

In the step for the preparation of a coating liquid, the mass ratio of the amount of the oligomer in Silica Sol (A) to that of the oligomer in Silica Sol (B) is preferably controlled such that it falls within the range of from 0.1 to 10 and preferably 0.25 to 4 as expressed in terms of, for instance, the ratio: [Amount of Silica Sol (A)]/[Amount of Silica Sol (B)] from the viewpoint of forming projection bodies having a height suitable for ensuring good anti-glare characteristics or having an average height or surface roughness (Ra) ranging from 0.1 to 4 µm and preferably 0.1 to 0.3 µm and for the purpose of making the formation of a highly strengthened thin film easy.

If the foregoing ratio is less than 0.1, the resulting film is liable to have a low strength. For instance, the resulting film often has insufficient resistance to scratch marks (scratch resistance). On the other hand, if the ratio exceeds 10, it would be quite difficult to form projection bodies on the substrate surface, which can ensure good anti-glare characteristics. Moreover, some problems arise, such that the resulting thin film has only a less number of aryl groups and it would be difficult to obtain a film having an easy washability when the step for drying the coated film is carried out at a low temperature.

Silica Sol (C) is preferably prepared by hydrolysis and/or polycondensation in such a manner that the number average molecular weight of the oligomer having silica crosslinks ranges from 500 to 1000 and preferably 700 to 900 as expressed in terms of that converted into the molecular weight of polystyrene. Examples of raw materials favorably used for preparing Silica Sol (C) are silanes carrying one or two alkyl groups per silicon atom such as methyl trichlorosilane, ethyl trichlorosilane, methyl trimethoxy silane, methyl triethoxy silane, ethyl trimethoxy silane, ethyl triethoxy silane, dimethyl dichlorosilane, dimethyl diethoxy silane, diethyl dichlorosilane, diethyl dichlorosilane, diethyl dimethoxy silane and diethyl diethoxy silane. Among these raw materials, preferred are tri-functional alkoxysilanes each carrying one methyl group per silicon atom such as methyl trimethoxy silane and methyl triethoxy silane from the viewpoint of the easy controllability of the reactivity thereof, with methyl triethoxy silane being preferably used herein among others.

In the steps for forming a thin film by the application of the resulting coating liquid onto the surface of a glass substrate and the subsequent drying the coated layer, the incorporation of Silica Sol (C) into the coating liquid would make, quite easy, the control of the generation of any stress within the film due to the drying operation and therefore, the incorporation of the silica sol would likewise make the formation of a thin film free of any crack easy.

In this respect, if the number average molecular weight of the silicon oxide oligomer having bonds between alkyl groups and silicon atoms and present in Silica Sol (C) exceeds 1000, large convex and concave portions are formed when realizing an anti-glare thin film and accordingly, the resulting film has insufficient quality. On the other hand, if the number average molecular weight of the oligomer having bonds between alkyl groups and silicon atoms is less than 500, it would be difficult to obtain an anti-glare thin film excellent in the uniformity.

Silica Sol (C) may be incorporated into the coating liquid in any amount insofar as the resulting thin film shows desired anti-glare characteristic properties and accordingly, Silica Sol (C) may be introduced into the coating liquid in the step for preparing the coating liquid, in such a manner that the mass ratio of the amount of the oligomer present in Silica Sol (B) to that of the oligomer present in Silica Sol (C) falls within the range of from 0.1 to 10 and preferably 0.25 to 4 as expressed in terms of, for instance, the ratio: [Amount of Silica Sol (B)]/[Amount of Silica Sol (C)]. If the foregoing ratio is less than 0.1, the resulting film is liable to have a low strength. For instance, the resulting film often has insufficient resistance to scratch marks (scratch resistance). On the other hand, if the ratio exceeds 10, it would be quite difficult to control the generation of any stress within the resulting thin film during the heat-treatment of the same and accordingly, the resulting thin film is quite susceptible to crack-formation.

Examples of the glass substrates usable in the present invention include plate-like glass substrates such as soda lime silicate glass, borosilicate glass, alumonosilicate glass, barium borosilicate glass and quartz glass, with glass substrates prepared according to the floating technique being particularly preferred. Furthermore, these glass substrates usable herein may likewise be, for instance, clear glass products; colored glass products such as those colored in green and bronze; functional glass products such as UV- and IR-screening glass products; and safety glass products such as reinforced, semi-reinforced and laminated glass products. Moreover, in addition to these inorganic glass products, organic glass materials may likewise be usable in the present invention and examples thereof include plastic glass materials such as those prepared from polycarbonate (PC), poly(methyl methacrylate) (PMMA) and polyethylene terephthalate (PET).

The thickness of the glass substrate used herein is appropriately be selected while taking into consideration each particular application of the resulting anti-glare glass substrate, but the glass substrate usable herein may in general have a thickness, for instance, ranging from 0.1 to 10.0 mm. In particular, it is preferred to use a glass substrate having a plate thickness ranging from 0.1 to 1.3 mm when it is applied to the LCD devices such as a tablet PC from the viewpoint of the balance between the strength and mass of the glass substrate.

The resulting coating liquid is applied onto the surface of a glass substrate according to the spin-coating technique. The average height or the like of projection bodies can be controlled by properly adjusting the rotational speed of a whirler during the coating operations. There is observed such a tendency that the rotational speed is in inverse proportion to the average height of the projections. Furthermore, the average height of the projection bodies has such a tendency that it increases along with the increase in the rate of the moderately hydrophobic silica sol having bonds between aryl groups and silicon atoms, among other silica sols to be incorporated into the coating liquid.

Accordingly, it is preferred to adjust the rotational speed upon the application of the coating liquid to the surface of a glass substrate to a level ranging from 100 to 2000 rpm and preferably 100 to 1000 rpm, in order to be able to easily control the size and distribution density of the projection bodies in such a manner that they can fall within the ranges specified above, respectively.

Moreover, in the step for preparing the coating liquid, it is also preferred to adjust the total quantity of the oligomers as the solid content to be introduced into the coating liquid should range from 1 to 30% by mass and preferably 5 to 10 µm as expressed in terms of the concentration in the liquid from the same standpoint discussed above. In addition, the method preferably comprises an additional leveling step for ensuring the leveling of the coated liquid after the application of the coating liquid. In the leveling step, the rotational speed of the whirler is preferably set at a level ranging from 0 (the rotational motion thereof is stopped) to 100 rpm. After the completion of these steps, the resulting film is suitably subjected to an optional heating step to thus promote the drying of the film and to heat and cure the coating and thus, a desired glass substrate can be obtained, to which an anti-glare characteristics are imparted.

In the foregoing heating step, the glass substrate is desirably heated to a temperature ranging from 100 to 700°C and preferably 100 to 600°C. In this respect, if the heating temperature is less than 100°C, the resulting coating or thin film is liable to be insufficiently densified, while if the temperature exceeds 700°C, the resulting coating or the thin film is excessively densified and accordingly, it is quite difficult to control the shape and distribution density of the projected bodies formed on the coating or thin film so as to fall within the ranges specified above according to the present invention.

The resulting coating suitably has a thickness which falls within the range of from 0.2 to 5 µm and preferably 0.5 to 2 µm.

For example, each of the projection bodies has a tip in the proximity to the center of the projection body as will be seen from Fig. 1, when the step for drying with heating after the application of the coating liquid onto the surface of a glass substrate is carried out at a low heating temperature, while when the drying step is carried out at a high temperature, there is observed release of aryl groups and each of the projection bodies has a shape whose central portion is depressed as shown in Fig. 2. In any case, there is not observed any significant difference in the both anti-glare function and partial iridescence-control effect of the coating, but if the projection bodies originated from the aryl groups are present on the film surface, the resulting product may ensure an ability of smoothly writing information with a pen. In addition, such a film may easily be washed. In consideration of the foregoing, the structures of the foregoing projection bodies are preferably projection bodies each having a dome-like shape which is free of any depressed portion at the center thereof. Accordingly, the foregoing heating temperature is preferably controlled such that it can fall within the range of from 100 to 600°C.

### Examples

The present invention will now be described in more specifically with reference to the following Examples and Comparative Examples.

First of all, the following are the methods for the evaluation of anti-glare glass substrates:

### 1. Observation of Coating Surface

The surface condition of a coating was determined by observing a shape in the area having a size of 100µm×100µm using a contact type surface-scanner (SUPERCORDER ET4000A available from KOSAKA Laboratory Co., Ltd.). The height data were obtained at intervals of 1 µm and determined for 10,000 points, in all, in the area of 100 µm×100 µm. The numerical values of the height thus practically determined were plotted on a two-dimensional plane and the surface shape was three-dimensionally drawn. The results thus obtained are shown in Figs. 1 to 5. The height of the projection bodies was calculated on the basis of the results of this observation.

### 2. Determination of Surface Roughness (Ra)

The arithmetic average of the surface roughness Ra was calculated on the basis of the height data observed for the 10,000 points in all, in the area of the coating having a size of 100 µm × 100 µm used in the foregoing surface observation 1, according to the method specified in "JIS B0601 (2001)".

### 3. Number of Projection Bodies per Unit Area

The projection body is herein defined to be a portion having a height above the coating surface level, based on the height data obtained for the area of the coating having a size of 100 µm×100 µm used in the foregoing coating surface observation 1, and the number of projection bodies was counted.

### 4. Average Diameter (µm) of Projection Body

On the basis of the height data obtained for the area of the coating having a size of 100 µm × 100 µm used in the foregoing coating surface observation 1, the average diameter was determined as follows: all of the diameters of the projection bodies observed on the bottom surface area were summed up, followed by dividing the resulting value by the total number of projection bodies observed on the same area.

### 5. Average Bottom Surface Area of Projection Bodies

On the basis of the height data obtained for the area on the thin film having a size of 100 µm × 100 µm used in the foregoing surface observation 1, the bottom surface area of a projection body is so defined to be that of the area of the projection body in the same area, and all of the areas of these projection bodies observed on the area were summed up, followed by dividing the resulting value by the total number of projection bodies observed on the area.

### 6. 60-Deg. Relative-Specular Glossiness

After subjecting the back of a glass substrate to an anti-reflection treatment by the application of a black paint onto to the back, the 60-deg. relative-specular glossiness was determined at the center of each sample using a relative-specular glossiness-determining device (Σ 80COLOR MEASURING SYSTEM VGS) available from Nippon Denshoku Co., Ltd., according to the method as specified in JIS-Z8741 (1997).

### 7. Evaluation of Partial Iridescence Generated from Interference

The partial iridescence generated due to the interference was herein evaluated according to the following sensory test: An LCD panel was brought into close contact with one side of an anti-glare glass substrate, which was free of any projection body for anti-glare and ten panelists were requested for the evaluation of the degree of the partial iridescence generated due to the interference observed when the LCD panel was in the white display condition on the basis of the following 5-stage criteria (each grade ranging from 1 to 5): The sample having an average value of less than 1.5 was evaluated to be good (○); that having an average value of not less than 1.5 and less than 3 was evaluated to be acceptable (Δ); and that having an average value of not less than 3 was evaluated to be unacceptable (×). In this test, the LCD panel used was that mounted on a notebook-sized personal computer (Model: FMV-830NU/L) available from Fujitsu Ltd., and the evaluation was carried out within a room maintained at an illuminance of 1000 Lx.

### 8. Evaluation of Clearness and Outward Appearance of Image Displayed on LCD

An LCD panel was brought into close contact with one side of an anti-glare glass substrate, which was free of any projection body for anti-glare and ten panelists were requested for the evaluation of the outward appearance of the images displayed on the LCD panel on the basis of the following 5-stage evaluation criteria (each grade ranging from 1 to 5). In this connection, the outward appearance of the images observed when any anti-glare glass substrate was not present (control) was evaluated as a grade of 3 and the practical samples were evaluated, while comparing with the grade of the control: The sample having an average value of less than 1.5 was evaluated to be good (○); that having an average value of not less than 1.5 and less than 3 was evaluated to be acceptable (Δ); and that having an average value of not less than 3 was evaluated to be unacceptable (×). In this test, the LCD panel used was that mounted on a notebook-sized personal computer (Model: FMV-830NU/L) available from Fujitsu Ltd., and the evaluation was carried out within a room maintained at an illuminance of 1000 Lx.

### 9. Evaluation of Easy Washability

After each sample was intentionally contaminated with organic contaminants such as dusts and fingerprints, the surface of each sample was then subjected to the following washing operations, in order: (1) lightly wiping the sample with a wet duster (going forward and backward over 5 times); (2) strongly wiping the sample with a wet duster (going forward and backward over 10 times); (3) strongly wiping the sample with hard sponge (going forward and backward over 100 times); (4) polishing the sample with steel wool (one minute); and (5) polishing the sample with ceria (2 minutes) and the easy washability of each sample was defined to be the operational level wherein the contaminants were completely be removed from the sample and it was evaluated according to the following two-stage criteria: the sample required only the washing step (1) for the complete removal of the contaminant was evaluated to be excellent (○) in the easy washability; and all of the other cases were evaluated to be acceptable (Δ).

### 10. Evaluation of Film Hardness

The surface of each sample was inspected for the presence of any defect after writing information on the surface thereof with pencils having a variety of hardness, according to the method specified in "JIS K5400 (1990)". In this connection, the highest pencil hardness by which the sample surface was never damaged was defined to be the hardness of the sample film, which was evaluated on the basis of the following criteria: the sample showing the highest pencil hardness of not less than 6H was judged to be excellent (○); and that showing the highest pencil hardness of not less than 5H was judged to be acceptable (Δ).

### Example 1

### 1. Preparation of Coating Liquid for Forming Anti-Glare Coating

### · Preparation of Silica Sol (A):

Tetraethoxy-silane (Si(OC₂H₅)₄) was used as a starting alkoxide, water for hydrolysis was added thereto so that the molar ratio: water/alkoxide was adjusted to 8, nitric acid as an acid catalyst was likewise added to the starting alkoxide so as to adjust the molar ratio: nitric acid/water to 0.01 and ethanol as a solvent was added thereto in such a manner that the solid content of the reaction solution was set at a level of 9% by mass as expressed in terms of the concentration converted into that of SiO₂, after the completion of the hydrolysis. The resulting mixed liquid was hydrolyzed and/or polycondensed by stirring the same at room temperature over 24 hours to thus give Silica Sol (A). The resulting Silica Sol (A) was found to have a number average molecular weight of 613.

### · Preparation of Silica Sol (B):

Phenyl triethoxy-silane (C₆H₅Si(OC₂H₅)₃) was used as a starting alkoxide, water for hydrolysis was added thereto so that the molar ratio: water/alkoxide was adjusted to 8, nitric acid as an acid catalyst was likewise added to the starting alkoxide so as to adjust the molar ratio: nitric acid/water to 0.01 and ethanol as a solvent was added thereto in such a manner that the solid content of the reaction solution was set at a level of 9% by mass as expressed in terms of the concentration converted into that of C₆H₅SiO_{3/2}, after the completion of the hydrolysis. The resulting mixed liquid was hydrolyzed and/or polycondensed by stirring the same at a temperature of 60°C over 24 hours to thus give Silica Sol (B). The resulting Silica Sol (B) was found to have a number average molecular weight of 613.

### · Preparation of Silica Sol (C):

Methyl triethoxy-silane (CH₃Si(OC₂H₅)₃) was used as a starting alkoxide, water for hydrolysis was added thereto so that the molar ratio: water/alkoxide was adjusted to 8, nitric acid as an acid catalyst was likewise added to the starting alkoxide so as to adjust the molar ratio: nitric acid/water to 0.01 and ethanol as a solvent was added thereto in such a manner that the solid content of the reaction solution was set at a level of 9% by mass as expressed in terms of the concentration converted into that of CH₃SiO_{3/2}, after the completion of the hydrolysis. The resulting mixed liquid was hydrolyzed and/or polycondensed by stirring the same at a temperature of 65°C over 24 hours to thus give Silica Sol (C). The resulting Silica Sol (C) was found to have a number average molecular weight of 812.

The number average molecular weights of Silica Sol (A), Silica Sol (B) and Silica Sol (C) are also listed in the following Table 1. These Silica Sol (A), Silica Sol (B) and Silica Sol (C) were mixed together at a mixing ratio (by mass): Silica Sol (A)/Silica Sol (B)/Silica Sol (C) of 4/3/2, followed by the stirring of the resulting mixture for 10 minutes to thus give a coating liquid used for forming an anti-glare coating.

In this connection, the average molecular weights of the oligomers present in these Silica Sol (A), Silica Sol (B) and Silica Sol (C) were determined according to the gel permeation chromatography (GPC) technique and they were expressed in terms of the molecular weights converted into that of polystyrene as a standard. The GPC measurements were carried out using a high-speed GPC device HLC-8020 available from Tosoh Corporation. The columns used in this determination were the following four kinds of columns (30 cm each): TSKgel G4000H-HR, G3000H-HR, G2000H-HR and G2000H-HR connected in a parallel relation and the detector used was a differential refractometer. Furthermore, the columns and the detector were maintained at temperatures of 40.0°C and 38.0°C, respectively. The eluting liquid used herein was tetrahydrofuran (THF) and the flow rate thereof was set at a level of 1 ml/min. The molecular weight of each sample was determined from the resulting GPC chart as a number average molecular weight as expressed in terms of that converted into the value of polystyrene. These results of the molecular weight determination are also listed in the following Table 1.

**Table 1**

| Ex. No. | 1 | 2 | 3 | 1* | 2* |
|---|---|---|---|---|---|
| Number Average Molecular Weight | | | | | |
| Silica Sol (A) | 613 | 613 | 613 | 613 | 613 |
| Silica Sol (B) | 861 | 861 | 861 | 480 | 455 |
| Silica Sol (C) | 812 | 812 | -- | 812 | 812 |
| Silica Sol mixing ratio (by mass) (A): (B): (C) | 4:3:2 | 4:3:2 | 2:1:0 | 4:3:2 | 4:3:2 |
| Heat-treatment Temp. (°C) | 300 | 650 | 300 | 300 | 300 |
| Surface roughness Ra (µm) | 0.32 | 0.25 | 0.28 | 0.06 | 0.34 |
| No. of projection bodies per unit area (number/10000 µm²) | 13 | 19 | 10 | 34 | 3 |
| Av. diameter of projection body (µm) | 16.5 | 13.4 | 17.3 | 8.3 | 37.3 |
| Thickness of Coating (µm) | 1.7 | 1.5 | 1.7 | 1.8 | 1.6 |
| Ave. Bottom Surface Area (µm²) | 214 | 141 | 235 | 54 | 1094 |
| Ratio: av. diameter of projection body/ surface roughness | 51.6 | 53.6 | 61.8 | 138.3 | 110.0 |
| 60-Deg. relative-specular glossiness | 65 | 68 | 57 | 99 | 55 |
| Eval. of partial iridescence generated due to interference | ○ | ○ | ○ | ○ | × |
| Eval. of outward appearance of images displayed on LCD | ○ | ○ | ○ | ○ | ○ |
| Eval. of film hardness | ○ (8H) | ○ (9H) | Δ (5H) | ○ (8H) | ○(8H) |
| Eval. of easy washability | ○ | Δ | ○ | ○ | ○ |

| | | | | | |
|---|---|---|---|---|---|
| *: Comparative Example | | | | | |

### 2. Preparation of Anti-glare Glass Substrate

The glass substrate used herein was a soda lime silicate glass plate prepared by the floating technique and having a rectangular shape of 200 mm (length), 200 mm (width) and 0.7 mm (thickness), 30 ml of the coating liquid prepared in the foregoing step 1 was dropwise added to the substrate at the center thereof, and the liquid was spread on the substrate surface according to the spin-coating method in which the substrate was rotated at a rotational speed of 300 rpm for 100 seconds using a whirler. After the completion of the coating operation, the substrate provided thereon with the coating liquid in the form of a layer was heated at 300°C for 10 minutes to thus give an anti-glare glass substrate.

Each of the coatings formed on these anti-glare glass substrates thus prepared was subjected to the observation of the coating surface, and inspected for a variety of characteristic properties such as the surface roughness, the distribution density of projection bodies per unit area, the 60-deg. relative-specular glossiness, the partial iridescence generated due to interference, the outward appearance of images displayed on LCD and the coating hardness.

The results obtained in the observation of the coating surfaces are shown in Fig. 1 and the other results are summarized in the foregoing Table 1. The anti-glare glass substrate prepared in Example 1 is provided with small hill-like projection bodies formed on an approximately planar surface, possesses satisfactory characteristic properties such as the anti-glare characteristics (60-deg. relative-specular glossiness), the partial iridescence generated due to interference, the outward appearance of images displayed on LCD and the film hardness, and can suitably be used as an anti-glare glass substrate for LCD display elements such as pen-input devices.

### Example 2

The same procedures used in Example 1 were repeated except that the heating temperature after the completion of the coating operation was changed to 650°C to thus prepare an anti-glare glass substrate. The results obtained in the observation of the coating surface are shown in Fig. 2. There were observed projection bodies on an approximately planar surface, but these projection bodies were not small hill-like projected bodies having a tip at the center thereof such as those observed for the anti-glare glass substrate prepared in Example 1, but small hill-like projection bodies whose central portion is depressed. The coating formed on the anti-glare glass substrate thus prepared was inspected for a variety of characteristic properties such as the surface roughness, the distribution density of the depressed portions per unit area, the 60-deg. relative-specular glossiness, the partial iridescence generated due to interference, the outward appearance of images displayed on LCD and the film hardness. The results thus obtained are summarized in the foregoing Table 1. Although the easy washability of the product was judged to be Δ, but the resulting anti-glare glass substrate was found to have excellent optical characteristic properties sufficient for use as the anti-glare glass substrate for LCD display elements.

### Example 3

The same procedures used in Example 1 were repeated except that Silica Sol (A) and Silica Sol (B) were blended together in a mixing ratio (by mass): Silica Sol (A): Silica Sol (B) of 2:1 and that the addition of Silica Sol (C) was omitted, to thus prepare an anti-glare glass substrate. The results obtained in the observation of the anti-glare coating thus prepared are shown in Fig. 3. Although fine cracks were formed on the coating between the neighboring projection bodies, there was observed a pattern of projection bodies formed on an approximately planar surface resulted from the bi-nodal phase separation.

The anti-glare thin film thus formed was inspected for a variety of characteristic properties such as the surface roughness, the distribution density of the projection bodies per unit area, the 60-deg. relative-specular glossiness, the partial iridescence generated due to interference, and the coating hardness. The results thus obtained are summarized in the foregoing Table 1. As a result, the coating hardness was found to be 5H or judged to be Δ, but it was found to be excellent in the 60-deg. relative-specular glossiness, the partial iridescence generated due to interference, and the outward appearance of images displayed on LCD. Therefore, the anti-glare coating has satisfactory optical characteristic properties sufficient for use as the anti-glare glass substrate for LCD display elements.

### Comparative Example 1

The same procedures used in Example 1 were repeated except that the stirring temperature when preparing Silica Sol (B) was changed to room temperature to thus prepare an anti-glare glass substrate. The resulting Silica Sol (B) was found to have a number average molecular weight of 480. The resulting coating was subjected to the observation of the coating surface, and inspected for a variety of characteristic properties such as the surface roughness, the distribution density of projection bodies per unit area, the 60-deg. relative-specular glossiness, the partial iridescence generated due to interference, the outward appearance of images displayed on LCD and the film hardness. The results obtained in the observation of the coating surface are shown in Fig. 4. The coating prepared according to the foregoing procedures possesses only small-sized projection bodies and accordingly, never shows any anti-glare function. As a result, it was concluded that the product of this Comparative Example 1 could not be acceptable as an anti-glare glass substrate for LCD display elements.

### Comparative Example 2

The same procedures used in Example 1 were repeated except that the stirring time when preparing Silica Sol (B) was changed to 3 hours to thus prepare an anti-glare glass substrate. The resulting Silica Sol (B) was found to have a number average molecular weight of 455. The resulting coating was subjected to the observation of the coating surface, and inspected for a variety of characteristic properties such as the surface roughness, the distribution density of projection bodies per unit area, the 60-deg. relative-specular glossiness, the partial iridescence generated due to interference, the outward appearance of images displayed on LCD and the coating hardness. The results obtained in the observation of the coating surface are shown in Fig. 5 and the other results are summarized in the foregoing Table 1. The coating prepared according to the foregoing procedures was found to have 3 projection bodies per unit area of 100 µm ×100 µm. As a result, it was found that the product showed an anti-glare function per se, but there was observed a partial iridescence due to interference when it was placed on an LCD panel and the latter was operated in its white display condition. Thus, it was concluded that the product of this Comparative Example 2 could not likewise be acceptable as an anti-glare glass substrate for LCD display elements.

## Claims

1. An anti-glare glass substrate used for liquid crystal display devices, which comprises:
a glass substrate; and
a coating covering one side of said substrate;
said coating having, on its surface, projection bodies which have round bottom surfaces and have an average bottom surface area ranging from 80 to 400 µm²;
said projection bodies being randomly arranged on said coating at a density of 5 or more projection bodies per an area equivalent to one pixel of the liquid crystal display device; and
said coating having a surface roughness from 0.1 to 0.4 µm.

2. The anti-glare glass substrate of claim 1, wherein said average diameter of said bottom surfaces of the projection bodies is 25 to 500 times said surface roughness.

3. The anti-glare glass substrate of claim 1 or 2, wherein it is used as a cover glass for a liquid crystal display device.

4. The anti-glare glass substrate of any one of claims 1 to 3, wherein the liquid crystal display device is one incorporated into a pen-input device.

5. A method for the preparation of an anti-glare glass substrate comprising the steps:
(1) preparing a coating liquid by blending a silica sol (A) consisting of an oligomer whose crosslinking is formed from [SiO_{4/2}] as crosslinking units and whose number average molecular weight ranges from 300 to 1000 as expressed in terms of that converted into the molecular weight of polystyrene and a silica sol (B) consisting of an oligomer in which silicon oxides having bonds between aryl groups and silicon atoms are formed as crosslinking units and whose number average molecular weight ranges from 500 to 1000 as expressed in terms of that converted into the molecular weight of polystyrene; and
(2) applying said coating liquid onto the surface of a glass substrate using a spin coating, to prepare an anti-glare glass substrate.

6. The method of claim 5, wherein said coating liquid further comprises silica sol (C) consisting of an oligomer in which silicon oxides having bonds between alkyl groups and silicon atoms are formed as crosslinking units and whose number average molecular weight ranges from 500 to 1000 as expressed in terms of that converted into the molecular weight of polystyrene.

7. The method of claim 5 or 6, wherein said glass substrate is heated at a temperature ranging from 100 to 600°C, after step (2).
